# FASCICULE DE BREVET EUROPEEN

(11) **EP 3 416 873 B1**
(45) Date de publication et mention de la délivrance du brevet: **26.02.2020**
(21) Numéro de dépôt: 17707604.9
(22) Date de dépôt: 26.01.2017
(51) Int. Cl.: B62D 25/16, B62D 25/18

(54) **DISPOSITIF DE FIXATION D'UN GARDE-BOUE SUR LA CAISSE D'UN VÉHICULE AUTOMOBILE**
VORRICHTUNG ZUR BEFESTIGUNG EINES KOTFLÜGELS AM FAHRGESTELL EINES KRAFTFAHRZEUGS
DEVICE FOR ATTACHING A MUDGUARD TO THE BODY OF A MOTOR VEHICLE

(30) Priorité: 18.02.2016 FR 1651300
(43) Date de publication de la demande: 26.12.2018
(73) Titulaire: PSA AUTOMOBILES S.A., 78300 Poissy (FR)
(72) Inventeur: TAVERNIER, Luc, 25470 Trevillers (FR); KRSTIC, Dragan, 90400 Danjoutin (FR); GUESNEY, Emmanuel, 25700 Valentigney (FR); ROBERT, Hervé, 25200 Montbeliard (FR); HECK, Aurelien, 25200 Montbelliard (FR)
(74) Mandataire: Fernandez, Francis Lionel
(86) Numéro de dépôt international: PCT/FR2017/050174
(87) Numéro de publication internationale: WO 2017/140963

(56) Documents cités:
- GB-A- 2 510 163
- JP-A- 2016 007 875
- JP-U- H0 344 082

## Description

La présente invention est du domaine des véhicules automobiles et relève plus particulièrement de l'assemblage de composants sur la caisse d'un véhicule automobile. La présente invention porte plus spécifiquement sur les modalités de fixation d'un garde-boue sur la caisse d'un véhicule automobile.

La caisse d'un véhicule automobile constitue une ossature sur laquelle sont rapportés divers composants du véhicule. Parmi ces composants, il est à considérer les éléments ou ensemble d'éléments de carrosserie formant un habillage du véhicule, tels que notamment des ailes et/ou des enjoliveurs. L'habillage du véhicule lui confère son aérodynamisme et son esthétique extérieure à laquelle la clientèle est particulièrement sensible.

Parmi les composants fixés sur la caisse du véhicule, la présente invention s'inscrit dans le contexte d'un ensemble de composants situé dans l'environnement proche d'un passage de roue du véhicule. Un tel ensemble de composants comprend notamment un garde-boue, une aile et un enjoliveur d'aile.

Le garde-boue est un composant semi-rigide du véhicule agencé en une coque globalement conformé en dôme. Le garde-boue est disposé à l'intérieur d'un passage de roue, pour faire obstacle aux salissures et/ou aux particules susceptibles d'être projetées par la roue lorsque le véhicule est en progression. Le garde-boue est fixé sur la caisse en une pluralité de points d'attache pour son maintien en position à l'intérieur du passage de roue. Le garde-boue comporte typiquement un débouché latéral vers l'extérieur du véhicule, pour ménager un accès à la roue depuis le côté latéral extérieur du véhicule.

L'aile habille classiquement une zone latérale droite ou gauche d'extrémité longitudinale du véhicule, en étant fixée à la caisse en une pluralité de points d'attache. L'aile comporte un bord d'accostage contre un bord de caisse arqué délimitant typiquement le passage de roue du côté latéral extérieur de la caisse du véhicule. L'aile est fixée au bord de caisse arquée par l'intermédiaire de son bord d'accostage et comporte un dégagement délimité au moins en partie par son bord d'accostage pour ménager un accès au volume délimité par le garde-boue depuis le côté latéral extérieur du véhicule.

L'enjoliveur d'aile est globalement conformé en portion d'anneau et est fixé à la caisse et/ou à l'aile en une pluralité de points d'ancrage. L'enjoliveur d'aile habille le bord de l'aile délimitant son dégagement, pour notamment masquer la zone d'accostage de l'aile contre le bord de caisse arqué et ainsi ne pas rompre la ligne esthétique du véhicule dans la zone du passage de roue.

Pour connaître un environnement technologique proche de la présente invention, on pourra par exemple se reporter au document FR 3 018 257 (PEUGEOT CITROEN AUTOMOBILE SA). Ce document décrit une pièce de fixation sur la caisse d'un véhicule d'une aile avant et d'un garde-boue, ainsi que d'un enjoliveur de bas de caisse s'étendant entre deux passages de roue respectivement ménagés en zone avant et arrière du véhicule.

Le document JPH0344082 divulgue aussi un dispositif de fixation d'un garde-boue dans la zone du passage de roue.

La présente invention a pour objet un dispositif de fixation d'un garde-boue sur la caisse d'un véhicule automobile, ainsi qu'un véhicule comportant un tel dispositif de fixation pour la fixation sur la caisse de garde-boue avant et/ou arrière. La présente invention vise à surmonter diverses difficultés et/ou inconvénients constatés liés au montage et/ou à la présence du garde-boue dans le passage de roue.

Par exemple, il est utile que la fixation du garde-boue sur la caisse soit ferme en tenant compte de potentielles déformations du garde-boue induites par sa structure semi-rigide. Une mauvaise tenue du garde-boue sur la caisse peut être la cause d'une insatisfaction de la clientèle, tant au regard de l'aspect extérieur du véhicule que du confort des passagers.

En effet, une déformation du garde-boue peut être une source de dispersions du positionnement relatif entre le garde-boue et l'aile et/ou l'enjoliveur d'aile. De telles dispersions de positionnement peuvent avoir pour effet d'affecter l'esthétique du véhicule. En outre, un défaut de fixation du garde-boue sur la caisse peut être une source de vibrations génératrices de nuisances sonores affectant le confort des passagers.

Par exemple encore, il est courant de ménager un rabat du bord d'accostage de l'aile ou de l'enjoliveur d'aile vers l'intérieur du passage de roue en direction du garde-boue. Un tel rabat est typiquement positionné par rapport à l'enveloppe de roue et permet de retenir le garde-boue à l'encontre de son affaissement. Cependant, la présence d'un tel rabat affecte encore l'esthétique du véhicule en étant source d'un défaut d'aspect qu'il est souhaitable d'éviter.

Par exemple encore, l'aile et/ou l'enjoliveur d'aile sont couramment fixés à la caisse par l'intermédiaire d'organes d'attaches. Il est opportun que le garde-boue puisse protéger les organes d'attaches des particules et des salissures susceptibles d'être projetées par la roue lors de la progression du véhicule. Cependant, l'interdiction d'un tel passage de projectiles est délicate à obtenir. En effet, une mise en conformation régulière de la jonction entre le garde-boue et l'aile est délicate à réaliser compte tenu de la complexité de forme du volume de l'enveloppe de roue devant être pris en compte.

Dans ce contexte, le but de la présente invention est de parfaire les modalités de positionnement et/ou de fixation du garde-boue sur la caisse, notamment en remédiant aux difficultés et inconvénients susvisés.

Il est à relever qu'une telle recherche s'inscrit dans le cadre des contraintes économiques notoirement sévères dans le domaine de l'automobile, impliquant une recherche de limitation des coûts de production du véhicule.

Ainsi, les montages respectifs du garde-boue, de l'aile et/ou de l'enjoliveur d'aile sur la caisse du véhicule sont recherchés les plus aisés à réaliser possible. Les modalités de fixation du garde-boue sur la caisse sont aussi recherchées structurellement simples et pouvant être mises en œuvre à moindres coûts de fabrication, en limitant leur impact sur le montage sur la caisse des autres composants, aile et/ou enjoliveur d'aile notamment. Il est opportun de tenir compte des agencements prédéfinis de l'aile et/ou de l'enjoliveur d'aile, compte tenu de la ligne esthétique donnée du véhicule et d'une limitation des coûts induits par une modification d'agencement des éléments d'habillage du véhicule.

Le dispositif de la présente invention est un dispositif de fixation en une pluralité de points d'attache d'un garde-boue sur la caisse d'un véhicule automobile. La caisse ménage un passage de roue logeant le garde-boue. Le passage de roue est notamment délimité par un bord de caisse arqué sur lequel est destiné à être fixée une aile du véhicule. Le garde-boue est classiquement globalement conformé en dôme comportant un débouché latéral.

Le bord de caisse arqué est typiquement ménagé en bordure inférieure latérale de la caisse au regard du plan de roulage du véhicule. Le débouché latéral du dôme est typiquement formé par une ouverture latérale du dôme considéré suivant son axe d'extension en élévation. Lorsque le garde-boue est installé sur la caisse, son débouché latéral est classiquement orienté latéralement vers l'extérieur de la caisse.

Dans ce contexte, le dispositif de fixation de la présente invention est principalement reconnaissable en ce que les points d'attache du dispositif de fixation comprennent des points de fixation entre le bord du débouché latéral du garde-boue et le bord de caisse arqué. Par suite et hors considération du maintien du garde-boue par d'autres points d'attache participants du dispositif de fixation, le garde-boue est fermement maintenu sur la caisse par les points de fixation à son bord délimitant le débouché latéral du dôme.

Plus spécifiquement, les points de fixation associent chacun des organes de jonction incorporés de fabrication respectivement au bord du débouché latéral du garde-boue et au bord de caisse arqué. les organes de jonction sont fixés l'un à l'autre par au moins un organe de fixation, tel qu'une attache élastiquement déformable ou un rivet par exemple. Les points de fixation constituent des moyens de solidarisation directe entre le garde-boue et le bord de caisse arqué, notamment par l'intermédiaire des organes de jonction qu'ils incorporent respectivement et qui sont directement fixés l'un à l'autre.

Par suite, le garde-boue est fermement maintenu au bord de caisse arqué en zone supérieure du dôme, à l'encontre de son affaissement et/ou de sa déformation. Il est ainsi évité des défauts d'aspect depuis l'extérieur de la caisse susceptibles d'être induits par une déformation du garde-boue, telle qu'habituellement induite par affaissement du dôme fragilisé par son débouché latéral. En outre, le volume intérieur du passage de roue apparaît comme mieux habillé, ce qui satisfait la clientèle.

La mise en accostage du garde-boue contre le bord de caisse arqué procure une protection efficace des organes de fixation au bord de caisse arqué de l'aile et/ou d'un enjoliveur d'aile habillant l'aile. Le garde-boue est directement fixé sur le bord de caisse arqué et/ou sur l'aile, ce qui permet d'éviter des nuisances sonores en raison du placage de qualité obtenu du garde-boue contre le bord de caisse arqué, en le préservant de vibrations susceptible d'être générées par les composant aérodynamiques du véhicule constitués de l'aile et/ou de l'enjoliveur d'aile.

L'utilisation d'une pièce spécifique rapportée pour fixer entre eux le garde-boue et le bord de caisse arqué est évitée et des opérations simples de leur fixation entre eux peuvent être mises en œuvre. La fixation du garde-boue sur le bord de caisse arqué peut être compacte et peut permettre de respecter plus aisément les contraintes liées au volume de l'enveloppe de roue.

Le garde-boue peut s'étendre dans la zone de son débouché latéral au plus proche de l'aile, avec pour avantage d'éviter encore un défaut d'aspect. En effet, l'aile et/ou l'enjoliveur d'aile peuvent être dispensés d'un rabat vers l'intérieur du passage de roue, couramment d'une extension vers l'intérieur du passage de roue comprise entre 5 mm (cinq millimètres) et 10 mm. Pour rappel, un tel rabat est habituellement utilisé pour retenir le garde-boue et/ou pour masquer une déformation du garde-boue et/ou un écart de distance vers l'intérieur du passage de roue entre le garde-boue et l'aile.

Plus spécifiquement, chacun des points de fixation est agencé en au moins deux pattes fixées l'une à l'autre, dont une première patte équipant le bord du débouché latéral du garde-boue et dont une deuxième patte équipant le bord de caisse arqué. De telles pattes, constituant respectivement lesdits organes de jonction, peuvent être aisément intégrées de fabrication respectivement au garde-boue et au bord de caisse arqué, voire aussi tel que visé plus loin à l'aile.

De tels résultats sont susceptibles d'être plus particulièrement obtenus et/ou améliorés à partir des dispositions secondaires suivantes, considérées isolément ou en combinaison.

Chacun des points de fixation peut comporter une troisième patte équipant un bord d'accostage de l'aile au bord de caisse arqué et fixée au bord de caisse arqué par l'intermédiaire au moins de la deuxième patte. Par suite, les pattes peuvent être placées successivement en superposition l'une contre l'autre et être fixées ensemble par de mêmes organes de fixation.

Les points de fixation sont avantageusement répartis le long du bord de caisse arqué entre des points d'ancrage d'un enjoliveur d'aile au bord de caisse arqué, éventuellement via l'aile sur laquelle l'enjoliveur d'aile est fixé. La présence des organes de jonction respectivement au bord de caisse arqué et au bord du débouché latéral du dôme ne fait pas obstacle à la fixation de l'enjoliveur d'aile.

Distinction est faite entre les points de fixation du garde-boue sur le bord de caisse arqué et/ou sur le bord d'accostage de l'aile, et les points d'ancrage de l'enjoliveur d'aile sur l'aile et/ou sur le bord de caisse arqué. La présence des points de fixation du garde-boue au bord de caisse arqué n'affecte pas les modalités de fixation de l'enjoliveur d'aile sur l'aile et/ou sur le bord de caisse arqué.

Les pattes à partir desquelles les points de fixation sont agencés comportent avantageusement des languettes planes respectives fixées l'une à l'autre en superposition. Les languettes superposées s'étendent de préférence vers l'intérieur du passage de roue suivant un plan orienté sensiblement perpendiculairement à l'axe d'extension en élévation du dôme.

L'orientation des languettes superposées est à apprécier en tenant compte d'une potentielle inclinaison des languettes par rapport à ladite perpendicularité vis-à-vis de l'axe d'extension en élévation du dôme. En effet, les languettes superposées peuvent être plus ou moins inclinées individuellement par groupe de languettes superposées ou collectivement au regard des différents groupes de languettes composant respectivement les différents points de fixation.

Ainsi, la mise en superposition des pattes par l'intermédiaire des languettes est avantageusement réalisée sensiblement parallèlement au plan de roulage du véhicule. La languette de la première patte est de préférence disposée sous les autres languettes au regard du plan de roulage du véhicule, en formant une assise contre laquelle sont plaquées par suite de leur fixation entre elles successivement la languette de la deuxième patte et le cas échéant la languette de la troisième patte.

Les premières pattes sont avantageusement intégrées de moulage au garde-boue, en étant ménagées au pourtour d'échancrures respectives du bord du débouché latéral du dôme formé par le garde-boue.

Les premières pattes comprennent notamment chacune une dite languette ménagée le long de l'un des bords d'une dite échancrure. Les premières pattes comportent encore chacune des ailes de soutien de la languette dans son plan d'extension. De telles ailes de soutien sont respectivement ménagées le long de deux autres bords opposés de l'échancrure orientés sensiblement perpendiculairement à son bord bordé par la première languette.

Selon une forme de réalisation, les deuxièmes pattes sont intégrées au bord de caisse arqué par pliage de découpes respectives du bord de caisse arqué. La matière pliée issue des découpes forme avantageusement les languettes respectives des deuxièmes pattes. Les deuxièmes pattes sont respectivement constituées en tout et pour tout par les languettes issues de la matière rabattue des découpes.

On relèvera que les découpes ménagées au bord de caisse arqué pour former les deuxièmes languettes, ménagent avantageusement des couloirs de passage respectifs des premières pattes vers les deuxièmes pattes, notamment à partir d'une approche du garde-boue depuis le bas de caisse.

Selon une forme de réalisation, les troisièmes pattes sont intégrées à l'aile par découpage de fenêtres respectives ménagées en bordure du bord d'accostage de l'aile au bord de caisse arqué. La matière issue des fenêtres est pliée en formant les languettes respectives des troisièmes pattes. Les troisièmes pattes sont respectivement constituées en tout et pour tout par les languettes issues de la matière rabattue des fenêtres et pliée le long de l'un de leur bord.

La présente invention a aussi pour objet un véhicule automobile comportant une caisse sur laquelle est monté au moins un ensemble de composants comprenant au moins un garde-boue et une aile. Le garde-boue d'un dit ensemble de composants est fixé à la caisse par un dispositif de fixation tel qu'il vient d'être décrit.

Un exemple de réalisation de la présente invention va être décrit en relation avec les figures des planches annexées, dans lesquelles :
La figure 1 est une représentation partielle de côté d'une zone latérale arrière d'un véhicule automobile illustrant le contexte de la présente invention.
La figure 2 est une illustration en perspective d'un garde-boue destiné à être fixé à la caisse d'un véhicule automobile par un dispositif de fixation conforme à la présente invention.
La figure 3 est une illustration de côté d'un bord de caisse arqué sur lequel est destiné à être fixé le garde-boue représenté sur la figure 2.
La figure 4 est un détail de la figure 3, illustrant en perspective de dessus d'une patte intégrée au bord de caisse arqué représenté sur la figure 3 et dédiée à la fixation du garde-boue représenté sur la figure 2.
Les figures 5 et figure 6 sont des illustrations partielles en perspective respectivement de côté et de dessus du garde-boue représenté sur la figure 2, en position de fixation sur le bord de caisse arqué représenté sur la figure 3 et la figure 4 conformément à la présente invention.
La figure 7 est une illustration de côté d'un bord d'accostage d'une aile destinée à être fixée au bord de caisse représenté sur la figure 3 dans le cadre d'un dispositif de fixation conforme à la présente invention.

Les figures et leur description exposent des modalités particulières de réalisation de la présente invention, et peuvent être utiles pour mieux la définir tant dans ses particularités que dans sa généralité, notamment en relation avec la description de la présente invention qui vient d'être faite.

En outre pour clarifier et rendre aisée la lecture de la description qui va être faite de la présente invention, les organes communs représentés sur les différentes figures sont respectivement identifiés dans les descriptions propres à ces figures avec les mêmes numéros et/ou lettres de référence, sans impliquer leur représentation individuelle sur chacune des figures.

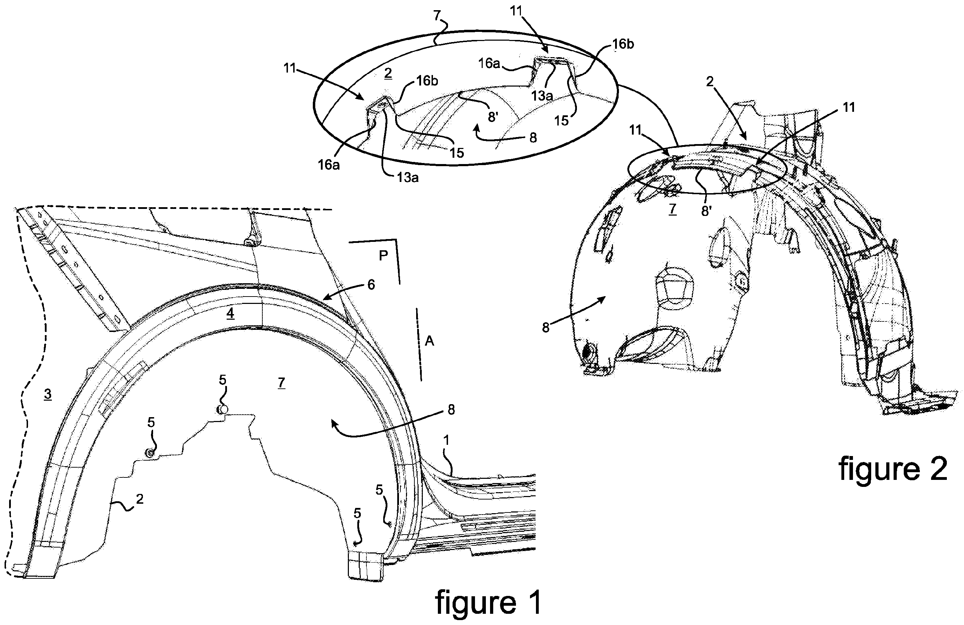

Sur la figure 1, la caisse 1 d'un véhicule automobile constitue une ossature sur laquelle sont rapportés divers composants. La caisse 1 ménage aussi des passages de roue, tel qu'un passage de roue arrière droit dans la zone du véhicule illustrée sur la figure. Parmi les composants rapportés sur la caisse 1, il est pris en considération dans le cadre de la présente invention un garde-boue 2, une aile 3 voire aussi un enjoliveur d'aile 4.

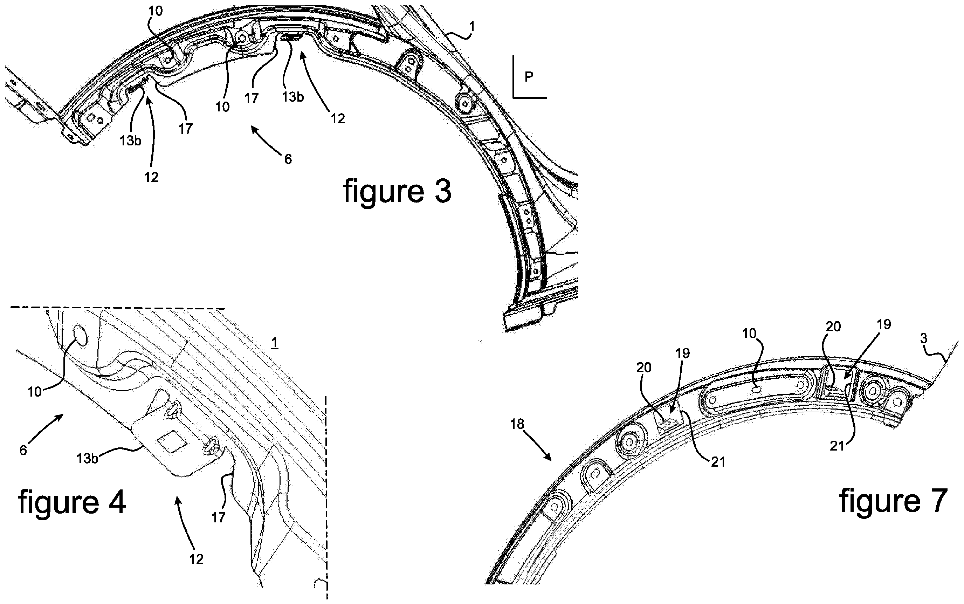

Le garde-boue 2 est installé dans le passage de roue, en étant fixé à la caisse 1 par un dispositif de fixation comprenant une pluralité de points d'attache, tels que pour certains d'entre eux les points d'attache 5 illustrés pour exemple. L'aile 3 et/ou l'enjoliveur d'aile 4 sont fixés sur la caisse 1 par l'intermédiaire d'un bord de caisse 6 de conformation typiquement arqué, par ailleurs représenté isolé sur la figure 3.

Sur la figure 2 plus particulièrement, le garde-boue 2 est un composant semi-rigide du véhicule agencé en une coque globalement conformée en dôme 7. Un tel dôme 7 s'étend classiquement suivant un axe d'extension en élévation A. Le garde-boue 2 comporte typiquement un débouché latéral 8 ouvert sur un côté du dôme 7 au regard de son axe d'extension en élévation A. Tel qu'illustré sur la figure 1, le débouché latéral 8 du garde-boue 2 est typiquement orienté latéralement vers l'extérieur du véhicule lorsque le garde-boue 2 est installé à l'intérieur du passage de roue.

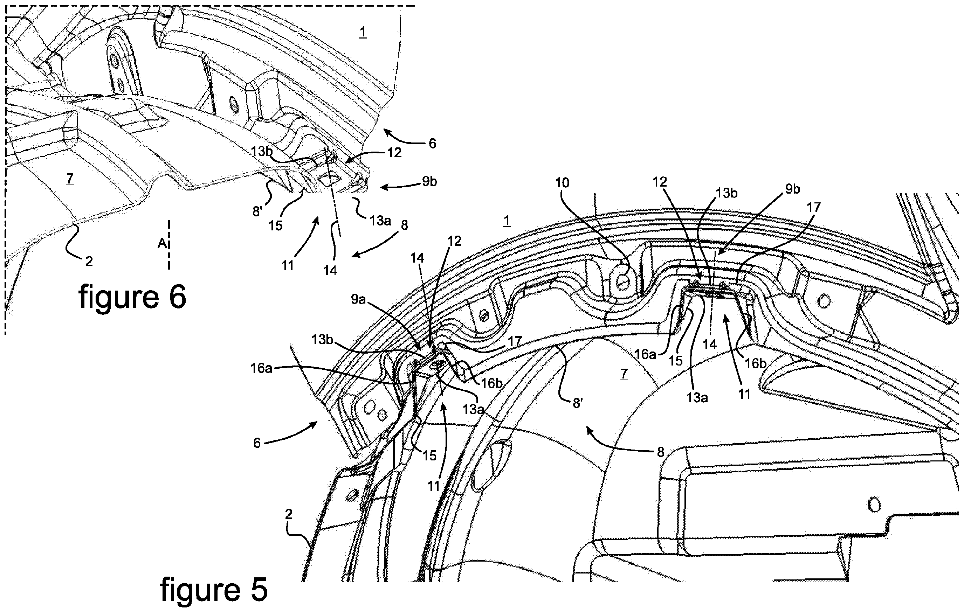

Sur la figure 5 et la figure 6, les points d'attache 5 du garde-boue 2 sur la caisse 1 comprennent plus spécifiquement des points de fixation 9a, 9b du garde-boue 2 au bord de caisse arqué 6. Les points de fixation 9a, 9b sont répartis le long du bord de caisse arqué 6 entre des points d'ancrage 10 de l'enjoliveur d'aile 4 au bord de caisse arqué 6. L'enjoliveur d'aile 4 est susceptible d'être ancré au bord de caisse arqué 6 directement ou par l'intermédiaire de l'aile 3 à laquelle l'enjoliveur d'aile 4 est dans ce cas directement ancré.

Les points de fixation 9a, 9b, au nombre de deux sur l'exemple de réalisation illustré, associent chacun des pattes 11, 12 respectivement incorporées au garde-boue 2 et au bord de caisse arqué 6. Une telle incorporation, ou en un autres terme intégration, est à considérer au regard du fait que les pattes 11, 12 sont issues de la matière constitutive respectivement du garde-boue 2 et du bord de caisse arqué 6, sans organe intermédiaire rapporté en interposition entre les pattes 11, 12 et respectivement le garde-boue 2 et le bord de caisse arqué 6.

Les pattes 11, 12 d'un point de fixation 9a, 9b donné comportent chacune une languette 13a, 13b plane. Lorsque le garde-boue 2 est monté à l'intérieur du passage de roue, les pattes 11,12 d'un point de fixation 9a, 9b donné sont fixées l'une à l'autre en superposition par des organes de fixations 14, tels que par exemple des attaches déformables ou des rivets. Les languettes 13a, 13b s'étendent alors vers l'intérieur du passage de roue en étant orientées dans leur plan d'extension sensiblement perpendiculairement à l'axe d'extension en élévation A du dôme 7.

Plus particulièrement et en se reportant aussi à la figure 2, le garde-boue 2 comporte des premières pattes 11 ménagées au bord 8' du débouché latéral 8 et en zone supérieure du dôme 7 suivant son axe d'extension en élévation A. Les premières pattes 11 sont intégrées de moulage au garde-boue 2 en étant ménagées en saillie vers l'extérieur du dôme 7. Les premières pattes 11 sont chacune agencées en capuchon coiffant une échancrure 15 ménagée dans la paroi du dôme 7 au bord 8' de son débouché latéral 8.

Les premières pattes 11 comprennent chacune une première languette 13a ménagée le long du bord supérieur d'une échancrure 15 qui leur est affectée. Les premières pattes 11 comprennent aussi chacune des ailes de soutien 16a, 16b de leur languette 13a dans son plan d'extension. Les ailes de soutien 16a, 16b sont ménagées en bordure des autres bords des échancrures 15.

Plus particulièrement encore sur la figure 3 et la figure 4, le bord de caisse arqué 6 comporte des deuxièmes pattes 12 formées chacune d'une deuxième languette 13b orientée perpendiculairement au plan P d'extension générale du bord de caisse arqué 6. Les deuxièmes languettes 13b constituent en elles-mêmes les deuxièmes pattes 12, en étant formées par pliage de la matière issue de découpes 17 respectives formées en bordure du bord de caisse arqué 6.

On remarquera que les découpes 17 formées dans le bord de caisse arqué 6 ménagent un passage pour les premières pattes 11 lors du montage du garde-boue 2 sur la caisse 1. Les points de fixation 9a, 9b sont ainsi disposés au plus proche du sommet du dôme 7 du garde-boue 2 à l'encontre de son affaissement, tel que visible sur la figure 2 notamment.

Sur la figure 7, l'aile 3 est susceptible d'être ancrée au bord de caisse arqué 6 au moins en partie par l'intermédiaire des points de fixation 9a, 9b. A cet effet, le bord d'accostage 18 de l'aile 3 contre le bord de caisse arqué 6 comporte des troisièmes pattes 19. Les troisièmes pattes 19 sont chacune formées d'une troisième languette 20 intégrée de fabrication à l'aile 3, sans affecter sa ligne esthétique visible depuis l'extérieur du véhicule.

Les troisièmes pattes 19 sont ménagées en bordure du bord d'accostage 18 de l'aile 3 contre le bord de caisse arqué 6, en étant formées par la matière rabattue de fenêtres 21 respectives ménagées en bordure du bord d'accostage 18 de l'aile 3. Lorsque le garde-boue 2 et l'aile 3 sont fixés au bord de caisse arqué 6, les troisièmes languettes 19 sont placées en superposition avec les premières languettes 13a et les deuxièmes languettes 13b.

## Revendications

1. Dispositif de fixation en une pluralité de points d'attache (5,9a,9b) d'un garde-boue (2) sur la caisse (1) d'un véhicule automobile, la caisse (1) ménageant un passage de roue logeant le garde-boue (2) et délimité par un bord de caisse arqué (6) sur lequel est destiné à être fixée une aile (3) du véhicule, le garde-boue (2) étant globalement conformé en dôme (7) comportant un débouché latéral (8), **caractérisé en ce que** les points d'attache du dispositif de fixation comprennent des points de fixation (9a,9b) entre le bord (8') du débouché latéral (8) du garde-boue (2) et le bord de caisse arqué (6), et **en ce que** chacun des points de fixation (9a,9b) étant agencé en au moins deux pattes (11,12,19) fixées l'une à l'autre, dont une première patte (11) équipant le bord (8') du débouché latéral (8) du garde-boue (2) et dont une deuxième patte (12) équipant le bord de caisse arqué (6).

2. Dispositif de fixation selon la revendication 1, **caractérisé en ce que** chacun des points de fixation (9a,9b) comporte une troisième patte (19) équipant un bord d'accostage (18) de l'aile (3) au bord de caisse arqué (6) et fixée au bord de caisse arqué (6) par l'intermédiaire au moins de la deuxième patte (12).

3. Dispositif de fixation selon l'une quelconque des revendications 1 et 2, **caractérisé en ce que** les points de fixation (9a,9b) sont répartis le long du bord de caisse arqué (6) entre des points d'ancrage (10) d'un enjoliveur d'aile (4) au bord de caisse arqué (6).

4. Dispositif de fixation selon l'une quelconque des revendications 1 à 3, **caractérisé en ce que** les pattes (11,12,19) comportent des languettes (13a, 13b, 20) planes respectives fixées l'une à l'autre en superposition.

5. Dispositif de fixation selon la revendication 4, **caractérisé en ce que** les languettes (13a,13b,20) superposées s'étendent à l'intérieur du passage de roue suivant un plan orienté sensiblement perpendiculairement à l'axe d'extension en élévation (A) du dôme (7).

6. Dispositif de fixation selon l'une quelconque des revendications 4 et 5, **caractérisé en ce que** les premières pattes (11) sont intégrées de moulage au garde-boue (2) en étant ménagées au pourtour d'échancrures (15) respectives du bord (8') du débouché latéral (8) du dôme (7) formé par le garde-boue (2), les premières pattes (11) comprenant chacune une dite languette (13a) et des ailes de soutien (16a,16b) de la languette (13a) dans son plan d'extension.

7. Dispositif de fixation selon l'une quelconque des revendications 4 à 6, **caractérisé en ce que** les deuxièmes pattes (12) sont intégrées au bord de caisse arqué (6) par pliage de découpes (17) respectives du bord de caisse arqué (6), la matière pliée issue des découpes (17) formant les languettes (13b) de la deuxième patte (12).

8. Dispositif de fixation selon l'une quelconque des revendications 4 à 7, **caractérisé en ce que** les troisièmes pattes (19) sont intégrées à l'aile (3) par découpage de fenêtres (21) respectives ménagées en bordure du bord d'accostage (18) de l'aile (3) au bord de caisse arqué (6), et pliage de la matière issue des fenêtres (21) formant les languettes (20) respectives des troisièmes pattes (19).

9. Véhicule automobile comportant une caisse (1) sur laquelle est monté au moins un ensemble de composants comprenant au moins un garde-boue (2) et une aile (3), **caractérisé en ce que** le garde-boue (2) est fixé à la caisse (1) par un dispositif de fixation conforme à l'un quelconque des revendications 1 à 8.

## Patentansprüche

1. Vorrichtung zum Befestigen an einer Vielzahl von Anbringungsstellen (5, 9a, 9b) eines Kotflügels (2) auf dem Fahrgestell (1) eines Kraftfahrzeugs, wobei das Fahrgestell (1) einen Radlauf einrichtet, der den Kotflügel (2) aufnimmt und durch einen gebogenen Fahrgestellrand (6) abgegrenzt ist, auf dem ein Flügel (3) des Fahrzeugs zu befestigen ist, wobei der Kotflügel (2) insgesamt als Kuppel (7) ausgestaltet ist, die eine seitliche Mündung (8) umfasst, **dadurch gekennzeichnet, dass** die Anbringungsstellen der Befestigungsvorrichtung Befestigungsstellen (9a, 9b) zwischen dem Rand (8') der seitlichen Mündung (8) des Kotflügels (2) und dem gewölbten Fahrgestellrand (6) umfassen, und dass jede der Befestigungsstellen (9a, 9b) in mindestens zwei Pratzen (11, 12, 19) eingerichtet ist, die aneinander befestigt sind, von welchen eine erste Pratze (11) den Rand (8') der seitlichen Mündung (8) des Kotflügels (2) ausstattet, und eine zweite Pratze (12) den gewölbten Fahrgestellrand (6) ausstattet.

2. Befestigungsvorrichtung nach Anspruch 1, **dadurch gekennzeichnet, dass** jede der Befestigungsstellen (9a, 9b) eine dritte Pratze (19) umfasst, die einen Andockrand (18) des Flügels (3) an dem gewölbten Fahrgestellrand (6) ausstattet und an dem gewölbten Fahrgestellrand (6) über mindestens die zweite Pratze (12) befestigt ist.

3. Befestigungsvorrichtung nach einem der Ansprüche 1 und 2, **dadurch gekennzeichnet, dass** die Befestigungsstellen (9a, 9b) entlang des gewölbten Fahrgestellrands (6) zwischen Verankerungsstellen (10) einer Flügelzierleiste (4) an dem gewölbten Fahrgestellrand (6) verteilt sind.

4. Befestigungsvorrichtung nach einem der Ansprüche 1 bis 3, **dadurch gekennzeichnet, dass** die Pratzen (11, 12, 19) flache Zungen (13a, 13b, 20), die jeweils aneinander in Überlagerung befestigt sind, umfassen.

5. Befestigungsvorrichtung nach Anspruch 4, **dadurch gekennzeichnet, dass** sich die überlagerten Zungen (13a, 13b, 20) in dem Inneren des Radlaufs entlang einer Ebene erstrecken, die im Wesentlichen zu der Höhenausdehnungsachse (A) der Kuppel (7) senkrecht ausgerichtet sind.

6. Befestigungsvorrichtung nach einem der Ansprüche 4 und 5, **dadurch gekennzeichnet, dass** die ersten Pratzen (11) durch Formen an dem Kotflügel (2) integriert sind, indem sie am Umfang jeweiliger Aussparungen (15) des Rands (8') der seitlichen Mündung (8) der Kuppel (7), die von dem Kotflügel (2) gebildet wird, eingerichtet sind, wobei die ersten Pratzen (11) jeweils die Zunge (13a) und Stützflügel (16a, 16b) der Zunge (13a) in ihrer Ausdehnungsebene umfassen.

7. Befestigungsvorrichtung nach einem der Ansprüche 4 bis 6, **dadurch gekennzeichnet, dass** die zweiten Pratzen (12) an dem gewölbten Fahrgestellrand (6) durch Falten jeweiliger Ausschnitte (17) des gewölbten Fahrgestellrands (6) integriert sind, wobei das gefaltete Material, das aus den Ausschnitten (17) hervorgeht, die Zungen (13b) der zweiten Pratze (12) bildet.

8. Befestigungsvorrichtung nach einem der Ansprüche 4 bis 7, **dadurch gekennzeichnet, dass** die dritten Pratzen (19) in den Flügel (3) durch Ausschneiden jeweiliger Fenster (21) die an dem Rand des Andockrands (18) des Flügels (3) an der Kante des gewölbten Fahrgestellrands (6) eingerichtet sind, integriert sind, und das Falten des Materials, das aus den Fenstern (21) hervorgeht, die jeweiligen Zungen (20) der dritten Pratzen (19) bildet.

9. Kraftfahrzeug, das ein Fahrgestell (1) umfasst, auf dem mindestens eine Einheit von Bauteilen montiert ist, die mindestens einen Kotflügel (2) und einen Flügel (3) umfasst, **dadurch gekennzeichnet, dass** der Kotflügel (2) an dem Fahrgestell (1) durch eine Befestigungsvorrichtung nach einem der Ansprüche 1 bis 8 befestigt ist.

## Claims

1. A device for attaching a mudguard (2) to the body (1) of a motor vehicle at a plurality of fastening points (5, 9a, 9b), the body (1) forming a wheelhouse accommodating the mudguard (2) and delimited by an arched body edge (6) on which a wing (3) of the vehicle is intended to be attached, the mudguard (2) being generally dome-shaped (7) comprising a lateral opening (8), **characterized in that** the fastening points of the attachment device include attachment points (9a, 9b) between the edge (8') of the lateral opening (8) of the mudguard (2) and the arched body edge (6), and **in that** each of the attachment points (9a, 9b) being arranged in at least two lugs (11, 12, 19) attached to one another, a first lug (11) of which equipping the edge (8') of the lateral opening (8) of the mudguard (2) and a second lug (12) of which equipping the arched body edge (6).

2. The attaching device according to Claim 1, **characterized in that** each of the attachment points (9a, 9b) comprises a third lug (19) equipping a mating edge (18) of the wing (3) to the arched body edge (6) and attached to the arched body edge (6) by means at least of the second lug (12).

3. The attaching device according to any one of Claims 1 and 2, **characterized in that** the attachment points (9a, 9b) are distributed along the arched body edge (6) between anchoring points (10) of a wing trim (4) to the arched body edge (6).

4. The attaching device according to any one of Claims 1 to 3, **characterized in that** the lugs (11, 12, 19) comprise respective flat tongues (13a, 13b, 20) attached to one another in superposition.

5. The attaching device according to Claim 4, **characterized in that** the superposed tongues (13a, 13b, 20) extend in the interior of the wheelhouse along a plane oriented substantially perpendicularly to the extension axis in elevation (A) of the dome (7) .

6. The attaching device according to any one of Claims 4 and 5, **characterized in that** the first lugs (11) are integrated by moulding to the mudguard (2), being arranged on the periphery of respective notches (15) of the edge (8') of the lateral opening (8) of the dome (7) formed by the mudguard (2), the first lugs (11) each including a said tongue (13a) and support wings (16a,16b) of the tongue (13a) in its extension plane.

7. The attaching device according to any one of Claims 4 to 6, **characterized in that** the second lugs (12) are integrated to the arched body edge (6) by bending of respective cutouts (17) of the arched body edge (6), the bent material originating from the cutouts (17) forming the tongues (13b) of the second lug (12).

8. The attaching device according to any one of Claims 4 to 7, **characterized in that** the third lugs (19) are integrated to the wing (3) by cutting out respective windows (21) arranged on the border of the mating edge (18) of the wing (3) to the arched body edge (6), and bending of the material originating from the windows (21) forming the respective tongues (20) of the third lugs (19).

9. A motor vehicle comprising a body (1) on which at least one assembly of components is mounted including at least one mudguard (2) and a wing (3), **characterized in that** the mudguard (2) is attached to the body (1) by an attaching device according to any one of Claims 1 to 8.
